**Europäisches Patentamt**

**European Patent Office**

**Office européen des brevets**

(11) Veröffentlichungsnummer: **0 507 421 A2**

# (12) EUROPÄISCHE PATENTANMELDUNG

(21) Anmeldenummer: **92250036.8**

(22) Anmeldetag: **20.02.92**

(51) Int. Cl.⁵: **A62D 3/00**, B09B 3/00

(30) Priorität: **03.04.91 DE 4111121**

(43) Veröffentlichungstag der Anmeldung:
**07.10.92 Patentblatt 92/41**

(84) Benannte Vertragsstaaten:
**AT BE CH DE ES FR GB IT LI LU NL**

(71) Anmelder: **Preussag Noell Wassertechnik GmbH**
**Alfred-Nobel-Strasse 20**
**W-8700 Würzburg 1(DE)**

(72) Erfinder: **Röckelein, Michael**
**Feriendorf 82**
**W-6120 Vielbrunn/Michelstadt(DE)**
Erfinder: **Schies, Ursula**
**St. Bendiktstrasse 2 1/2**
**W-8700 Würzburg(DE)**
Erfinder: **Nowak, Herbert**
**Övraby**
**S-27391 Tomelilla(SE)**

(74) Vertreter: **Köckeritz, Günter et al**
**c/o Preussag AG, Patente & Lizenzen,**
**Postfach 15 12 27**
**W-1000 Berlin 15(DE)**

(54) **Verfahren zur Dekontaminierung von mit Xenobiotika belasteten Böden, Schlämmen und/oder anderen Feststoffen.**

(57) Die Erfindung betrifft ein Verfahren zur Dekontaminierung von mit Xenobiotika belasteten Böden, Schlämmen und/oder anderen Feststoffen, wobei aus bodenfremden ligninabbauenden Pilzen und hemicellulosehaltigen Substanzen ein Pilzsubstrat hergestellt wird und das Pilzsubstrat in die kontaminierten Böden, Schlämme und/oder anderen Feststoffe eingebracht wird.
Bei dem erfindungsgemäßen Verfahren sollen die natürlichen Schutzmechanismen der vorbehandelten hemicellulosehaltigen Substanzen gegenüber Konkurrenzpilzen weitgehend erhalten bleiben. Weiterhin soll durch das Verfahren die Abbauleistung der bodenfremden ligninabbauenden Pilze erhöht werden sowie die Nutzung aller Abbauwege zur Dekontaminierung von Xenobiotika ermöglicht werden.

EP 0 507 421 A2

Die Erfindung betrifft ein Verfahren zur Dekontaminierung von mit Xenobiotika wie chemischen Kohlenstoffverbindungen aliphatischer und/oder alicyclischer und/oder aromatischer Art, insbesondere solchen Verbindungen wie Mineralöl-Kohlenwasserstoffen deren Derivate, beispielsweise Petroleum, Schmierölen, Mineralölen sowie ferner Benzenen, Phenolen, Cyaniden, Kerosin, Kresolen, Paraffinen, polyzyklische aromatische Kohlenwasserstoffe, Aminen und Alkoholen einzeln oder in Gemischen belasteten Böden, Schlämmen und/oder anderen Feststoffen, wobei aus bodenfremden ligninabbauenden Pilzen und hemicellulosehaltigen Substanzen ein Pilzsubstrat hergestellt wird und das Pilzsubstrat in die kontaminierten Böden, Schlämme und/oder anderen Feststoffe eingebracht wird.

Bisher gibt es für die Sanierung von mit Xenobiotika verunreinigten Böden keine zufriedenstellenden Verfahrenstechnologien.

In der EP-A 0 192 237 wird ein Verfahren zum Abbau von Bodenverunreinigungen beschrieben, in dem die Bodenverunreinigungen mit Pilzenzymen z. B. von Weißfäulepilzen unter aeroben Bedingungen abgebaut werden. Nach diesem Verfahren können halogenierte Aromate dekontaminiert werden. Eine umfassende Dekontaminierung von Xenobiotika wird nicht beschrieben. In der EP-A 0 312 793 bzw. DE-PS 37 31 816 werden hemicellulosehaltige Materialien mit verunreinigten Boden vermischt. In dem beschriebenen Verfahren werden die hemicellulosehaltigen Materialien einer kombinierten Druck- und Temperaturbehandlung in Gegenwart von Wasserdampf unterzogen. Die Druck- und Temperaturbehandlung kann bei Temperaturen von 110 bis 140°C erfolgen, wobei sich in einem geschlossenen System ein Druck von etwa 1 bis 3,6 bar einstellt. Eine Vorbehandlung der verwendeten Materialien unter 100°C und ohne Druckeinwirkung wird in obiger Druckschrift nicht erwähnt.

Der Erfindung liegt die Aufgabe zugrunde, ein Verfahren zur Dekontaminierung von mit Xenobiotika belasteten Böden, Schlämmen und/oder anderen Feststoffen zu entwickeln, nach welchem die natürlichen Schutzmechanismen der vorbehandelten hemicellulosehaltigen Substanzen gegenüber Konkurrenzpilzen weitgehend erhalten bleiben, die Abbauleistung der bodenfremden ligninabbauenden Pilze erhöht wird sowie die Nutzung aller Abbauwege zur Dekontaminierung von Xenobiotika ermöglicht wird. Erfindungsgemäß wird die Aufgabe dadurch gelöst, daß die hemicellulosehaltigen Substanzen wahlweise durch eines oder mehrere Verfahren aus der Gruppe Semisterilisation, Pasteurisation, aerobe Fermentation, anaerobe Fermentation und Verpressen vorbehandelt werden.

Semisterilisation und Pasteurisation unterscheiden sich nur graduell in Behandlungstemperaturen und -dauer. Die hemicellulosehaltigen Substanzen werden dabei für ein bis sechs Stunden auf 60 bis 100°C erhitzt und wahlweise vor oder nach der Wärmebehandlung befeuchtet.

Der Prozeß der aeroben Fermentation besteht aus zwei Schritten. Die hemicellulosehaltigen Substanzen werden zuerst pasteurisiert. Das Substrat sollte jedoch dabei nicht über 70°C erhitzt werden, weil sonst die nützliche Bakterienflora dezimiert wird. Anschließend wird das Substrat bei 40 bis 50°C in 48 bis 72 Stunden konditioniert. Die Gesamtdauer der aeroben Fermentation beträgt 2 bis 6 Tage.

Bei der semianaeroben Fermentation werden die hemicellulosehaltigen Substanzen in einem Tauchbecken oder einer wasserdichten Folie für 3 bis 21 Tage unter Wasser getaucht. Auf eine energieaufwendige Erwärmung kann verzichtet werden, denn bei Temperaturen von 7 bis 45°C verläuft die semianaerobe Fermentation erfolgreich.

Weiterhin können die hemicellulosehaltigen Substanzen wahlweise durch verschiedene Verpressverfahren wie Pelletieren, Brikettieren, Kompaktieren und Granulieren vorbehandelt werden. Der Preßdruck soll dabei zwischen 3 - 4 · $10^9$ Pa liegen, und in der Substanz soll dabei eine Temperatur zwischen 95 und 140°C erreicht werden. Vor der Impfung mit den bodenfremden ligninabbauenden Pilzen erfolgt ein Wässern des Substrates für 12 bis 24 Stunden. Dieses kostengünstige Verfahren, welches ohne Zufuhr von Wärmeenergie durchgeführt werden kann, bietet weiterhin den Vorteil, daß das unbeimpfte Substrat über mehrere Monate in Form von Schüttgut gelagert werden kann.

Beimpfte und nach allen oben genannten Verfahren vorbehandelte Substrate sind in luftdichten Folienbeuteln ebenfalls über mehrere Monate lagerbar.

Der Hygienisierungseffekt kann bei allen genannten Vorbehandlungsverfahren der hemicellulosehaltigen Substanzen durch Pestizidzugabe wie Fungizide und/oder Bakterizide und insbesondere durch Benzimidazol gestützt werden.

Bei keinem dieser Vorbehandlungsverfahren wird eine vollkommene Entkeimung erreicht, wodurch die natürlichen Schutzmechanismen der hemicellulosehaltigen Substanzen gegenüber Schad- oder Konkurrenzpilzen weitgehend erhalten bleiben.

Ein bevorzugtes Merkmal der Erfindung besteht darin, daß durch Einfräsen des Pilzsubstrates eine biologische Bodenbehandlung in stark schluffhaltigen Böden und entwässerten kontaminierten Schlämmen aus Bodenwaschanlagen möglich wird. Schluffhaltige Böden, also Böden mit einem hohen Schlämmkornanteil (Korndurchmesser < 0,06 mm) eigneten sich bisher wegen der schlechten Luft- und Wasserdurchlässigkeit nur bedingt oder gar nicht für die biologische on-site Sanierung. Organisch belastete Schlämme (Korndurchmesser in der Regel < 0,063 mm) aus Bodenwaschanlagen konnten bisher nur deponiert oder der Verbrennung zugeführt werden.

Durch die Verwendung von Pilzsubstrat und das intensive Einfräsen des Substrates in schluffhaltige Böden oder Schlämme entsteht eine gut wasser- und luftdurchlässige Bodenstruktur. Bei Verwendung üblicher Mischeinrichtungen, wie z. B. Mischtrommel oder Freifallmischer, neigen stark schluffhaltige Böden bzw. Schlämme - bei entsprechendem Feuchtegehalt - zur Pelletierung. Diese Pellets können bei entsprechender Aufenthaltszeit Durchmesser von 10 cm und mehr haben, so daß Pilzmycelien nicht mehr in das Innere dieses Haufwerkes hineinwachsen können.

Ein weiteres Merkmal der Erfindung besteht darin, daß den aufbereiteten dekontaminierten Böden, Schlämmen und/oder anderen Feststoffen vor und/oder während der Dekontaminierung $Mn^{2+}$ und/oder $Fe^{2+}$ zugeführt wird. Mit Hilfe dieser Elemente kann die Abbauleistung der Pilze erhöht werden. Der Pilz ist in der Lage, z. B. mehr Manganperoxidase zu produzieren. Dieses Enzym schützt die Pilzhyphen vor der toxischen Wirkung des Wasserstoffperoxids. Das bedeutet wiederum, daß bei gleichzeitiger Zugabe von $Mn^{2+}$ und/oder $Fe^{2+}$ auch die Dosis von Wasserstoffperoxid erhöht werden kann, wodurch die Abbauleistung der Pilze steigt.

Ein anderes bevorzugtes Merkmal der Erfindung besteht darin, daß bei dem erfindungsgemäßen Verfahren bodenfremde, ligninabbauende Pilze verwendet werden, die keine oder nur geringe Mengen an Phenoloxidasen produzieren, da diese Enzyme die Schadstoffe polymerisieren können.

Durch den Einsatz ausgewählter Pilzstämme kann eine Polymerisation der beim Abbau gebildeten Metabolite verhindert werden.

Ein weiteres Merkmal der Erfindung besteht darin, daß die Dekontaminierung in wahlweise zu betreibenden Aerob und/oder Anaerob Einrichtungen erfolgt. Damit wird gewährleistet, daß eine umfassendere Dekontaminierung von mit Xenobiotika verunreinigten Böden, Schlämmen und/oder anderen Feststoffen erfolgen kann, da bestimmte Verunreinigungen besser aerob und andere (z. B. halognierte Kohlenwasserstoffe) besser anaerob abbaubar sind.

Die belasteten Böden, Schlämme und/oder andere Feststoffe werden zur Dekontaminierung, wenn erforderlich, klassiert, gebrochen und homogen vermischt.
Die bei allen Verfahrensschritten freiwerdenden Stäube werden dabei über geeignete Dosiereinrichtungen den belasteten Böden, Schlämmen und/oder anderen Feststoffen emissionsarm wieder zugeführt, wodurch die Dekontaminierungseinrichtungen selbst als Biofilter wirken.

Das Pilzsubstrat kann als Flüssig- oder Trockenpilzsubstrat (gefriergetrocknet) dem belasteten Böden zugeführt werden, wobei der Anteil des mit bodenfremden ligninabbauenden Pilzmycelien durchwachsenen organischen Substrates in den belasteten Böden, Schlämmen und/oder anderen Feststoffen in Abhängigkeit vom Kontaminierungsgrad und dem Feinkornanteil mindestens 5,0 Gew.% betragen soll.

Die Dekontaminierung der belasteten Stoffe kann wahlweise in Regenerationsmieten, Trommeln, Schnellkompostern, Bioreaktoren, Rotteboxen oder auf belüftbaren Platten erfolgen.

Die für die Dekontamination vorbereiteten Böden, Schlämme und/oder anderen Feststoffe werden mit dem zuvor hergestellten Pilzsubstrat derart vermischt, beispielsweise mit einer Stachelwalze, daß die Temperatur des Gemisches nicht mehr als 45°C erreicht.

Zur Anzucht des Pilzsubstrates selbst sollen biologisch abbaubare Materialien wie z.B. Bio-Stoll-HDPE-Folien verwendet werden. Aber auch der Einsatz von Papiersäcken ist möglich. Der Vorteil liegt darin, daß diese Materialien mit dem Pilzsubstrat z. B. direkt in die Miete eingebracht und abgebaut werden können. Ein aufwendiges Entfernen der Folie, wie es bei herkömmlichen Materialien der Fall ist, entfällt.

Es ist auch möglich, das Substrat direkt in Containern "in der Masse" anzuziehen. Das durchwachsene Substrat kann dann direkt, im gleichen Behälter, zum Sanierungsort gefahren werden.

Gemäß einem weiteren bevorzugten Merkmal der Erfindung wird die für die Pilze notwendige Feuchtigkeit sowie die Flüssigpilzbrut selbst über Sprühvorrichtungen und in den belasteten Böden, Schlämme und/oder anderen Feststoffen eingezogene Bewässerungseinrichtungen eingestellt.

Die in den Dekontaminationseinrichtungen durch Einblasen und/oder Saugen von Luft und/oder Sauerstoff in die belasteten Böden erzeugte Abluft wird über geeignete Filter wie Aktivkohle- und/oder Biofilter geführt.

Eine Infiltration von Niederschlägen in die belasteten Böden, Schlämme und/oder andere Feststoffe soll durch geeignete Vorrichtungen wie z. B. Folientunnel verhindert und die Vegetationsperiode dadurch verlängert werden.

Nach einem weiteren Merkmal der Erfindung können den Böden, Schlämmen und/oder anderen Feststoffen zur Dekontaminierung Tenside wie Biotenside und/oder synthetische Tenside zur Erhöhung der biologischen Verfügbarkeit der Schadstoffe zugesetzt werden.

Ein anderes bevorzugtes Merkmal der Erfindung sieht vor, daß eine zusätzliche und nachhaltige Durchmischung der kontaminierten Böden, Schlämme und/oder anderen Feststoffe mit dem Pilzsubstrat durch Bioturbation, wie z. B. durch den Einsatz von Regenwürmern erreicht werden kann.

Gemäß einem weiteren Merkmal der Erfindung können die Verfahren zur Vorbehandlung der hemicellulosehaltigen Substanzen wie Semisterilisation, Pasteurisation, aerobe Fermentation anaerobe Fermentation und Verpressen wie Brikettieren, Pelletieren, Kompaktieren und Granulieren auch für die Speisepilzproduktion verwendet werden.

Die Erfindung soll anhand zweier Ausführungsbeispiele näher erläutert werden.

Ausführungsbeispiel 1:

Stroh, am besten Weizenstroh, wird sehr klein gehäckselt und bei einem Druck von 3 - 4 · $10^9$ Pa pelletiert. Die Pellets haben dabei einen Durchmesser von 5 - 100 mm. Am Geeignetesten haben sich Durchmesser von ca. 10 mm erwiesen.

Durch den hohen Druck bei der Pelletierung steigt die Temperatur in den Pellets auf 120°C an. Dadurch werden Schad- und Konkurrenzorganismen des Weißfäulepilzes abgetötet, das Substrat wird hygienisiert. Die so gewonnenen Pellets können über mehrere Monate trocken gelagert werden. Eine weitere Vorbehandlung wie z. B. eine Wärmebehandlung ist nicht notwendig.

Für die Kultivierung des Weißfäulepilzes werden die Pellets für 6 - 24 Stunden gewässert. Am Besten ist ein etwa 12-stündiges Tauchen der Pellets unter Wasser.

Anschließend werden die Pellets mit dem Weißfäulepilz beimpft. Für die Anzuchtmethode ist besonders der Austernpilz (Pleurotus spp.) geeignet. Die Inokulationsmenge ist abhängig von der Pilzart und der erwünschten Durchwachsgeschwindigkeit. Es können Brutmengen von 0,5 bei 5 Gewichtsprozent oder mehr verwendet werden. Als vorteilhaft hat sich eine Brutmenge von 1 - 2 Gewichtsprozent erwiesen.

Das fertig beimpfte Substrat wird in Folienbeutel oder versteifte Papiersäcke gefüllt. Auch ein Durchwachsen in der Masse, d.h. in Containern ist möglich. Das Substrat hat dabei eine rel. Feuchtigkeit von ca. 75 %.

Nach 1 1/2 - 3 Wochen ist das Substrat soweit vom Austernpilzmyzel besiedelt, daß es für die Bodensanierung eingesetzt werden kann.

Belastete Böden, Schlämme und/oder andere Feststoffe werden in eine Aufgabeschurre gegeben und gelangen von dort auf ein Förderband mit einer darüber angeordneten Fräsvorrichtung. Anfallende Stäube werden abgesaugt und befeuchtet.

Parallel dazu wird einem weiteren Förderband mit einer darüber angeordneten Häckslervorrichtung mindestens 5,0 Gew.% (der belasteten Böden, Schlämme und/oder anderer Feststoffe) Pilzsubstrat aufgegeben.

Die Volumenströme aus beiden Förder-/Aufbereitungsvorrichtungen sowie die abgesaugten, befeuchteten Stäube werden auf ein drittes Förderband mit darüber angeordneter Fräsvorrichtung geworfen und hier innig vermischt.

Die Dekontaminierung der belasteten Böden, Schlämme und/oder anderer Feststoffe erfolgt auf einer gegen den Untergrund abgedichteten Fläche. Das aus der zuvor beschriebenen Bodenaufbereitung stammende Material wird trapezförmig über einem ringförmig angelegten Entlüftungssystem mit abzweigenden Stichen zur gleichmäßigen Luftsauerstoffverteilung ca. 1,80 m hoch aufgeschichtet und zur Vermeidung der Verdunstung und gegen übermäßige Wärmeeinstrahlung mit einer ca. 10 cm dicken Schicht aus Rindenmulch o. ä, abgedeckt. Auf und in den Regenerationsmieten werden Bewässerungseinrichtungen verlegt, um den für den biologischen Abbau erforderlichen Wasserhaushalt einzustellen und um die Mieten - falls erforderlich - mit Flüssigbrut zu versorgen. Zum Schutz vor der Infiltration von Niederschlägen und dem damit verbundenen Anfall von Sickerwasser werden die Mieten mit Folientunneln überdacht. Die Anwendung von Folientunneln bietet den Vorteil, daß die Temperaturen in den Mieten normalerweise nicht unter 5° C fallen, sie damit auch über die Wintermonate biologisch aktiv bleiben und sich die Zeit der Dekontaminierung verkürzt.

Das auf der Mietensohle verlegte Entlüftungssystem wird an ein Sauggebläse mit vorgeschaltetem Aktivkohlefilter angeschlossen.

Durch An- oder Abschalten der Sauggebläse können die Regenerationsmieten - in Abhängigkeit von den Schadstoffen - wahlweise aerob oder anaerob betrieben werden.

Ausführungsbeispiel 2:

Stroh, am besten Weizenstroh, wird sehr klein gehächselt und bei einem Druck von 3 - 4 · $10^9$ Pa pelletiert. Die Pellets haben dabei einen Durchmesser von 5 - 100 mm. Am geeignetesten haben sich Durchmesser von ca. 10 mm erwiesen.

Durch den hohen Druck der Pelletierung steigt die Temperatur in den Pellets auf 120°C an. Dadurch wird Schad- und Konkurrenzorganismen des Weißfäulepilzes abgetötet, das Substrat wird hygienisiert. Die so gewonnenen Pellets können über mehrere Monate trocken gelagert werden. Eine weitere Vorbehandlung wie z. B. eine Wärmebehandlung ist nicht notwendig.

Für die Kultivierung des Weißfäulepilzes werden die Pellets für 6 - 24 Stunden gewässert. Am Besten ist ein etwa 12-stündiges Tauchen der Pellets unter Wasser.

Anschließend werden die Pellets mit dem Weißfäulepilz beimpft. Für die Anzuchtmethode ist besonders der Austernpilz (Pleurotus spp.) geeignet. Die Inokulationsmenge ist abhängig von der Pilzart und der erwünschten Durchwachsgeschwindigkeit. Es können Brutmengen von 0,5 bis 5 Gewichtsprozent oder mehr verwendet werden. Als vorteilhaft hat sich eine Brutmenge von 1 - 2 Gewichtsprozent erwiesen.

Anschließend werden die Pellets mit dem Austernpilz (Pleurotus spp.) beimpft. Die Inokulationsmenge ist abhängig von der erwünschten Durchwachsgeschwindigkeit.

Als vorteilhaft hat sich eine Brutmenge 1 - 3 Gewichtsprozent erwiesen. Das fertig beimpfte wird in zuvor gelochte Folienbeutel gefüllt. Das Substrat hat dabei eine rel. Feuchte von 75 % (70-85). Nach ca. 3 Wochen - bei einer Lagerung bei 20-25°C - erscheinen die ersten Fruchtkörper.

**Patentansprüche**

1. Verfahren zur Dekontamination von mit Xenobiotika belasteten Böden, Schlämmen und/oder anderen Feststoffen, wobei aus bodenfremden ligninabbauenden Pilzen und hemicellulosehaltigen Substanzen ein Pilzsubstrat hergestellt wird und das Pilzsubstrat in die kontaminierten Böden, Schlämme und/oder anderen Feststoffe eingebracht wird, dadurch gekennzeichnet, daß
   - die hemicellulosehaltigen Substanzen wahlweise durch eines oder mehrere Verfahren aus der Gruppe Semisterilisation, Pasteurisation, aerobe Fermentation, anaerobe Fermentation und Verpressen vorbehandelt werden,
   - und durch Einfräsen des Pilzsubstrates eine biologische Bodenbehandlung in stark schluffhaltigen Böden und entwässerten kontaminierten Schlämmen aus Bodenwaschanlagen möglich wird,
   - und daß den aufbereiteten kontaminierten Böden, Schlämmen und/oder anderen Feststoffen vor und/oder während der Dekontaminierung $Mn^{2+}$ und/oder $Fe^{2+}$ zugeführt wird,
   - und die Dekontaminierung in wahlweise zu betreibenden Aerob- und/oder Anaerob-Einrichtungen erfolgt.

2. Verfahren nach Anspruch 1, dadurch gekennzeichnet, daß die hemicellulosehaltigen Substanzen - semisterilisiert und/oder pasteurisiert werden, wobei die hemicellulosehaltigen Substanzen für ein bis sechs Stunden auf 60 bis 100°C erhitzt werden und wahlweise vor oder nach der Wärmehandlung befeuchtet werden und/oder
   - aerob fermentiert werden, wobei die hemicellulosehaltigen Substanzen zuerst pasteurisiert und anschließend bei 40 bis 50°C für 48 bis 72 Stunden konditioniert werden und die Gesamtdauer der aeroben Fermentation 2 bis 6 Tage beträgt und/oder
   - semianaerob fermentiert werden, wobei die hemicellulosehaltigen Substanzen in einem Tauchbecken oder einer wasserdichten Folie für 3 bis 21 Tage unter Wasser getaucht werden und die Wassertemperatur in einem Bereich von 7 bis 45°C liegt und/oder
   - durch Verpressverfahren wahlweise eines oder mehrerer aus der Gruppe Pelletieren, Brikettieren, Kompaktieren und Granulieren vorbehandelt werden, wobei der Pressdruck zwischen 3 - 4 · $10^9$ Pa liegt und in der Substanz dabei eine Temperatur zwischen 95 und 140°C erreicht wird und vor der Impfung mit den bodenfremden ligninabbauenden Pilzen ein Wässern des Substrates von 12 bis 24 Stunden erfolgt.

3. Verfahren nach Anspruch 1 und 2, dadurch gekennzeichnet, daß das unbeimpfte Substrat nach dem Verpressen über mehrere Monate in Form von Schüttgut gelagert werden kann und das vorbehandelte und beimpfte Substrat in luftdichten Folienbeuteln über mehrere Monate gelagert werden kann.

4. Verfahren nach Anspruch 1 und 2, dadurch gekennzeichnet, daß bei der Vorbehandlung der hemicellulosehaltigen Substanzen ein Pestizid vorzugsweise ein Fungizid und/oder Bakterizid wie Benzimidazol in einer Konzentration von 50 bis 200 ppm zugesetzt werden kann.

5. Verfahren nach Anspruch 1, dadurch gekennzeichnet, daß bodenfremde ligninabbauende Pilze verwendet werden, die keine oder nur geringe Mengen an Phenoloxidasen produzieren und zur Anzucht des Pilzsubstrates biologisch abbaubare Materialien verwendet werden, die direkt mit dem Pilzsubstrat in der Dekontaminierungseinrichtung eingesetzt werden können.

6. Verfahren nach Anspruch 1, dadurch gekennzeichnet, daß die belasteten Böden, Schlämme und/oder andere Feststoffe, wenn erforderlich, klassiert, gebrochen und homogen vermischt werden und die bei allen Verfahrensschritten freiwerdenden Stäube über geeignete Dosiereinrichtung den belasteten Böden, Schlämmen und/oder anderen Feststoffen emissionsarm zugeführt werden.

7. Verfahren nach Anspruch 1 bis 6, dadurch gekennzeichnet, daß das Pilzsubstrat als Flüssig- oder Trockenpilzbrut über geeignete Dosiereinrichtung den vorbereiteten belasteten Böden, Schlämmen und/oder anderen Feststoffen zugeführt werden kann und der Anteil des mit bodenfremden ligninabbauenden Pilzmycelien durchwachsenen organischen Substrates in belasteten Böden, Schlämmen und/oder anderen Feststoffen mindestens 5,0 Gew.% beträgt.

8. Verfahren nach Anspruch 1 bis 7, dadurch gekennzeichnet, daß die aufbereiteten kontaminierten Böden, Schlämmen und/oder anderen Feststoffen mit dem zuvor hergestellten Pilzsubstrat derart vermischt wird, daß die Temperatur des Gemisches nicht mehr als 45°C erreicht.

9. Verfahren nach Anspruch 1 bis 8, dadurch gekennzeichnet, daß die Dekontaminierung der belasteten Böden, Schlämme und/oder anderen Feststoffen wahlweise in Regenerationsmieten, Trommeln, Schnellkompostern, Bioreaktoren, Rotteboxen oder auf belüftbaren Platten erfolgen kann.

10. Verfahren nach Anspruch 1 bis 9, dadurch gekennzeichnet, daß
    - über Sprühvorrichtungen und in die belasteten Böden, Schlämme und/oder anderen Feststoffe eingezogene Bewässerungseinrichtungen, die für die Pilze notwendige Feuchtigkeit eingestellt werden kann und
    - über geeignete Bewässerungsmöglichkeiten, Flüssigpilzbrut eingebracht werden kann und
    - die in den Dekontaminationseinrichtungen durch Einblasen und/oder Saugen von Luft und/oder Sauerstoff in die belasteten Böden, Schlämme und/oder anderen Feststoffe erzeugte Abluft über geeignete Filter wie z. B. Aktivkohle- und/oder Biofilter geführt wird.

11. Verfahren nach Anspruch 1 bis 10, dadurch gekennzeichnet, daß die Infiltration von Niederschlägen in die belasteten Böden, Schlämme und/oder anderen Feststoffe durch geeignete Vorrichtungen wie beispielsweise Folientunnel verhindert und die Vegetationsperiode dadurch verlängert wird.

12. Verfahren nach Anspruch 1, dadurch gekennzeichnet, daß den belasteten Böden, Schlämme und/oder anderen Feststoffen zur Dekontaminierung Tenside in Form von Biotensiden und/oder synthetischen Tensiden zugesetzt werden können.

13. Verfahren nach Anspruch 1, dadurch gekennzeichnet, daß eine zusätzliche und nachhaltige Durchmischung der kontaminierten Böden, Schlämme und/oder anderen Feststoffe mit dem Pilzsubstrat durch Bioturbation, wie z. B. durch den Einsatz von Regenwürmern erreicht werden kann.

14. Verwendung der Verfahren zur Vorbehandlung der hemicellulosehaltigen Substanzen wie Semisterilisation, Pasteurisation, aerobe Fermentation, anaerobe Fermentation und Verpressen wie Pelletieren, Brikettieren, Kompaktieren und Granulieren für die Speisepilzproduktion.